# EUROPEAN PATENT APPLICATION

(11) **EP 4 266 478 A2**
(43) Date of publication of application: **25.10.2023**
(21) Application number: 22203768.1
(22) Date of filing: 26.10.2022
(51) Int. Cl.: H01M 50/569, H01M 10/058

(54) **BATTERY, BATTERY APPARATUS AND BATTERY MANUFACTURING METHOD**

(30) Priority: 22.04.2022 CN 202210432237
(71) Applicant: CALB Co., Ltd., Changzhou City, Jiangsu Province (CN)
(72) Inventor: GU, Liangjie, Changzhou City, Jiangsu Province (CN); GUAN, Junshan, Changzhou City, Jiangsu Province (CN); LIU, Jiong, Changzhou City, Jiangsu Province (CN); YAN, Tinglu, Changzhou City, Jiangsu Province (CN); ZHANG, Yongjie, Changzhou City, Jiangsu Province (CN)
(74) Representative: Becker, Eberhard

(57) **Abstract**

The disclosure provides a battery, a battery apparatus, and a battery manufacturing method. The battery includes a battery casing (10). A peripheral edge of the battery casing (10) is provided with a flange structure (14), a potential collecting portion (15) is provided on the flange structure (14), and the potential collecting portion (15) extends from the flange structure (14). The flange structure (14) and the potential collecting portion (15) are integrally formed. By arranging the flange structure (14) at the peripheral edge of the battery casing (10) and by arranging the potential collecting portion (15) on the flange structure (14), the potential collecting portion (15) may be configured to be connected to a voltage collection structure.

## Description

### BACKGROUND

### Technical Field

The disclosure relates to the technical field of batteries, and in particular, relates to a battery, a battery apparatus, and a battery manufacturing method.

### Description of Related Art

In the related art, a battery includes a positive pole and a negative pole. When the batteries are used in groups, in order to monitor the running status of the batteries in real time, it is necessary to collect the voltage through the circuit board.

### SUMMARY

The disclosure provides a battery, a battery apparatus, and a battery manufacturing method.

According to the first aspect of the disclosure, the disclosure provides a battery. The battery includes a battery casing. A peripheral edge of the battery casing is provided with a flange structure, a potential collecting portion is provided on the flange structure, and the potential collecting portion extends from the flange structure. The flange structure and the potential collecting portion are integrally formed.

According to the second aspect of the disclosure, the disclosure further provides a battery manufacturing method, and the method includes the following steps. Welding a first casing piece and a second casing piece to form a battery casing. Cutting a flange on the first casing piece and/or a flange on the second casing piece to form a flange structure and a potential collecting portion extending from the flange structure on a peripheral edge of the battery casing.

According to the third aspect of the disclosure, the disclosure further provides a battery apparatus including said battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a partial schematic structural view illustrating a battery apparatus according to an exemplary embodiment.
FIG. 2 is a partial schematic structural view illustrating a battery apparatus according to another exemplary embodiment.
FIG. 3 is a partial schematic structural view illustrating a battery according to an exemplary embodiment.
FIG. 4 is an enlarged partial schematic structural view illustrating a battery according to an exemplary embodiment.
FIG. 5 is a partial schematic structural cross-sectional view illustrating a battery according to an exemplary embodiment.
FIG. 6 is a partial schematic structural view illustrating a battery according to a first exemplary embodiment.
FIG. 7 is a partial schematic structural view illustrating a battery according to a second exemplary embodiment.
FIG. 8 is a partial schematic structural view illustrating a battery according to a third exemplary embodiment.
FIG. 9 is a partial schematic structural view illustrating a battery according to a fourth exemplary embodiment.
FIG. 10 is a partial schematic structural view illustrating a battery according to a fifth exemplary embodiment.
FIG. 11 is a schematic flow chart of a battery manufacturing method according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

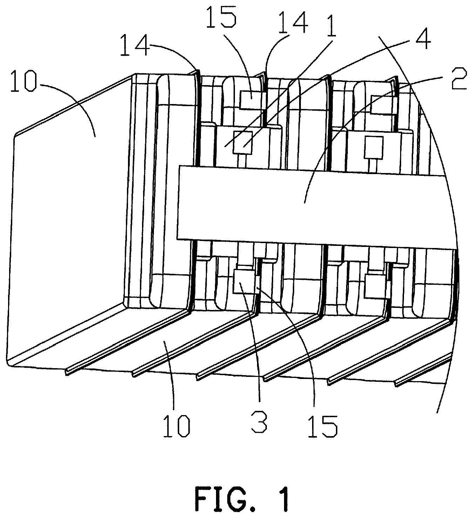

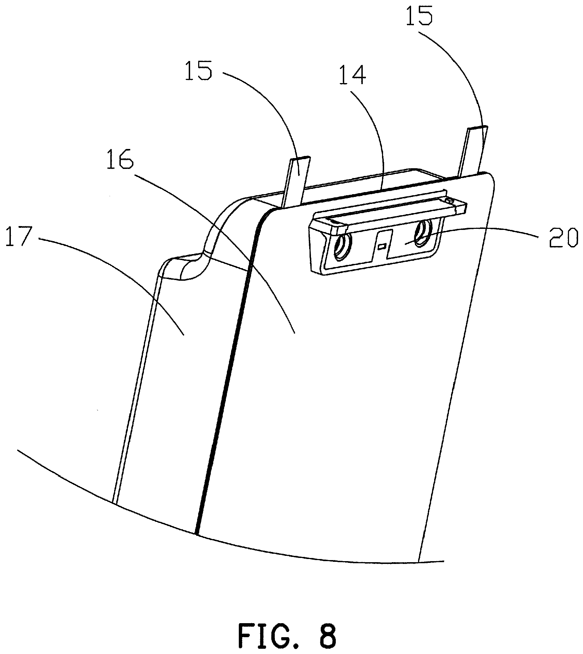

An embodiment of the disclosure provides a battery. With reference to FIG. 1 to FIG. 10, the battery includes a battery casing 10. A peripheral edge of the battery casing 10 is provided with a flange structure 14, a potential collecting portion 15 is provided on the flange structure 14, the potential collecting portion 15 extends from the flange structure 14, and the flange structure 14 and the potential collecting portion 15 are integrally formed.

The battery provided by an embodiment of the disclosure includes the battery casing 10, and by arranging the flange structure 14 at the peripheral edge of the battery casing 10 and by arranging the potential collecting portion 15 on the flange structure 14, the potential collecting portion 15 may be configured to be connected to a voltage collection structure, so as to facilitate the voltage collection and connection of the battery. By configuring the flange structure 14 and the potential collecting portion 15 to be integrally formed, processing and forming may be conveniently performed, materials are saved, and fewer processing steps are required, so that the forming efficiency of the battery is enhanced, and the performance of the battery is improved.

It should be noted that, the battery casing 10 is a metal casing, the peripheral edge of the battery casing 10 is provided with the flange structure 14, and the flange structure 14 may be used for positioning or heat conduction. The potential collection portion 15 provided integrally with the flange structure 14 may be used to be connected the voltage collection structure. The arrangement of the potential collection portion 15 indicates that the battery casing 10 may be used as a potential collection structure of the battery, and it can be further understood that a tab of a cell is electrically connected to the battery casing 10. For instance, a positive tab of the cell is electrically connected to the battery casing 10, and a negative tab of the cell is electrically connected to a pole assembly, such that the battery casing 10 and the pole assembly may be used as two potential collecting structures of the battery to be used for collecting the voltage of the battery. In this embodiment, by arranging the potential collecting portion 15 on the flange structure 14 of the battery casing 10, the connection between the voltage collecting structure and the potential collecting portions 15 may be easily formed.

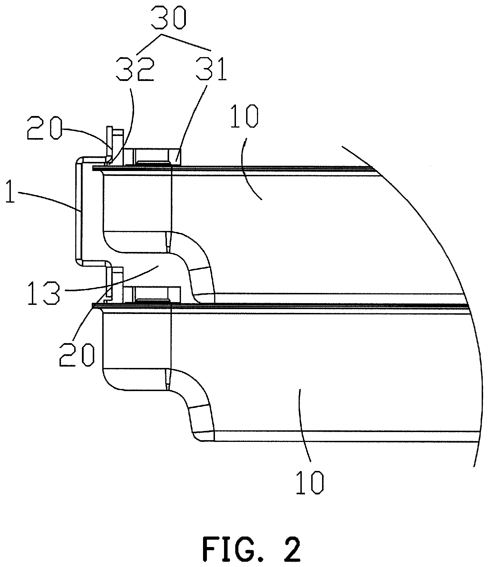

In an embodiment, as shown in FIG. 2 to FIG. 9, the battery further includes a pole assembly 20, and the pole assembly 20 is disposed on the battery casing 10.

The battery may include two pole assemblies 20, namely one positive pole assembly and one negative pole assembly. One of the two pole assemblies 20 is electrically connected to the battery casing 10, so that the potential collecting portion 15 may be used as a potential collecting structure of the battery. When the positive pole assembly is electrically connected to the battery casing 10, the negative pole assembly is insulated from the battery casing 10, and the potential collecting portion 15 and the negative pole assembly may be used as two potential collecting structures of the battery. When the negative pole assembly is electrically connected to the battery casing 10, the positive pole assembly is insulated from the battery casing 10, and the potential collecting portion 15 and the positive pole assembly may be used as two potential collecting structures of the battery.

The battery casing 10 may be electrically connected to one pole assembly 20 directly, or the battery casing 10 may be electrically connected to one pole assembly 20 through other conductive structures.

In an embodiment, two pole assemblies 20 are provided, and the two pole assemblies 20 are respectively disposed at two ends of the battery casing 10, and the two ends of the battery casing 10 are both provided with the potential collecting portions 15. Herein, the two pole assemblies 20 may be electrically connected to the battery casing 10 arbitrarily, and subsequently, the voltage collecting structure may be connected to the potential collecting portions 15 at both ends of the battery casing 10 selectively. For instance, the voltage collecting structure may be connected to the pole assembly 20 that is not electrically connected to the battery casing 10 as well as the adjacent potential collecting portion 15.

One pole assembly 20 of the two pole assemblies 20 may be electrically connected to one potential collecting portion 15 through a conductive structure. In this way, one pole assembly 20 may be electrically connected to the battery casing 10, so that the voltage collecting structure may be electrically connected to the other pole assembly 20 as well as the other potential collecting portion 15. The conductive structure can be a wire, a metal connection piece, etc., which is not limited herein. For instance, the positive pole assembly may be electrically connected to one potential collecting portion 15 through the conductive structure, and the negative electrode component and the other adjacent potential collecting portion 15 are configured to be electrically connected to the voltage collecting structure to collect the voltage of the battery.

In an embodiment, two pole assemblies 20 are provided, the two pole assemblies 20 are respectively disposed at two ends of the battery casing 10, and one end of the battery casing 10 is provided with the potential collecting portion 15. Among the two pole assemblies 20, the pole assembly 20 away from the potential collecting portion 15 is electrically connected to the battery casing 10, so that the voltage collecting structure may be connected to the pole assembly 20 and the adjacent potential collecting portion 15. For instance, when the potential collecting portion 15 is provided on one side of the positive pole assembly, the negative pole assembly is electrically connected to the battery casing 10, and the positive pole assembly and the potential collecting portion 15 are configured to be electrically connected to the voltage collecting structure to collect the voltage of the battery.

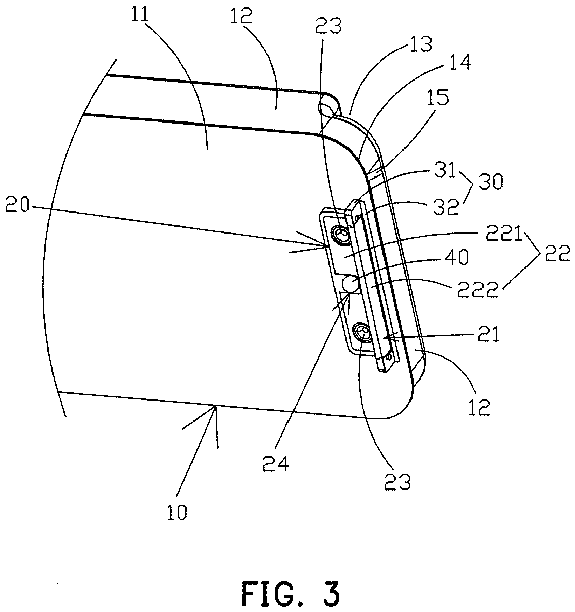

In an embodiment, as shown in FIG. 3 to FIG. 5, the battery further includes a conductive connecting piece 40. The conductive connecting piece 40 is connected to the battery casing 10 and the pole assembly 20, so that the battery casing 10 and the pole assembly 20 may be electrically connected through the conductive connecting piece 40.

In an embodiment, as shown in FIG. 3 to FIG. 5, the battery further includes an insulating piece 30. The pole assembly 20 is disposed on the battery casing 10 through the insulating piece 30, and the conductive connecting piece 40 may pass through the insulating piece 30 to be electrically connected to the battery casing 10.

In an embodiment, at least a portion of the insulating piece 30 is located outside the battery casing 10. The pole assembly 20 includes a connection surface 21 configured to be connected to a busbar 1. The connection surface 21 of the pole assembly 20 connected to the busbar 1 protrudes from the insulating piece 30, so that the busbar 1 and the connection surface 21 may be reliably connected easily.

In an embodiment, the insulating piece 30 is disposed on the battery casing 10 and covers the outer edge of the pole assembly 20. Through the arrangement of the insulating piece 30 and by allowing the insulating piece 30 to cover the outer edge of the pole assembly 20, the insulating piece 30 may be configured to fix the pole assembly 20. Since the insulating piece 30 is disposed on the battery casing 10, the pole assembly 20 may be disposed on the battery casing 10 through the insulating piece 30. In this way, it is ensured that the pole assembly 20 and the insulating piece 30 may have a sufficient contact area with the battery casing 10, and it is thus ensured that the pole assembly 20 is stably disposed on the battery casing 10. Herein, the cross-sectional area of the pole assembly 20 may be appropriately reduced, and the costs are saved and weight is reduced in this way.

The battery includes a cell and an electrolyte, and the battery is the smallest unit capable of performing electrochemical reactions such as charging/discharging. The cell refers to a unit formed by winding or laminating a stacked part, and the stacked part includes a first electrode, a separator, and a second electrode. When the first electrode is a positive electrode, the second electrode is a negative electrode. The polarities of the first electrode and the second electrode may be interchanged. The cell is disposed in the battery casing 10, the pole assembly 20 is electrically connected to the cell, and a portion of the pole assembly 20 may be located inside the battery casing 10, so that the pole assembly 20 may be electrically connected to the cell conveniently. Certainly, in some embodiments, it is not excluded that the entire pole assembly 20 is located outside the battery casing 10. The pole assembly 20 and the cell may be connected through a connection piece, or the pole assembly 20 and the cell may be directly connected.

To be specific, the cell may be a laminated cell. The cell has first electrodes that are stacked on each other, second electrodes whose electrical properties are opposite to the first electrodes, and diaphragm pieces disposed between the first electrodes and the second electrodes. Therefore, multiple pairs of the first electrodes and the second electrodes are stacked to form the laminated cell.

The cell may also be a roll cell. That is, the first electrodes, the second electrodes whose electrical properties are opposite to the first electrodes, and the diaphragm pieces disposed between the first electrodes and the second electrodes are wound to obtain a wound cell.

It should be noted that the insulating piece 30 may be an injection-molded piece, the insulating piece 30 may be made of plastic, or the insulating piece 30 may be made of rubber. The relevant material of the insulating piece 30 is not limited herein.

In an embodiment, the size of the connection surface 21 protruding from the insulating piece 30 is not greater than 0.1 mm. On the basis of ensuring that the busbar 1 may be reliably connected to the connection surface 21, the pole assembly 20 and the insulating piece 30 may provide sufficient fixed support for the busbar 1, thereby ensuring the stability of the busbar 1.

The busbar 1 and the connection surface 21 may be welded, and the size of the connection surface 21 protruding from the insulating piece 30 is not greater than 0.1 mm. In this way, the busbar 1 and the connection surface 21 do not generate false welding, the welding quality is improved, and the pole assembly 20 and the insulating piece 30 may provide a fixed support portion to ensure the support effect.

In some embodiments, the size of the connection surface 21 protruding from the insulating piece 30 may be equal to 0.01 mm, 0.02 mm, 0.03 mm, 0.05 mm, 0.08 mm, 0.09 mm, 0.095 mm, or 0.1 mm, etc. The connection surface 21 protrudes from the insulating piece 30, so that the connection surface 21 may be located outside the insulating piece 30, which facilitates reliable contact between the busbar 1 and the connection surface 21 and ensures the stability of welding of the busbar 1 and the connection surface 21 to be performed subsequently.

In an embodiment, an included angle is provided between the connection surface 21 and the surface of the battery casing 10 provided with the pole assembly 20. That is, an included angle greater than 0 degrees and less than 180 degrees is arranged between the connection surface 21 and the surface of the battery casing 10 provided with the pole assembly 20, so that the busbar 1 may be easily connected to the connection surface 21.

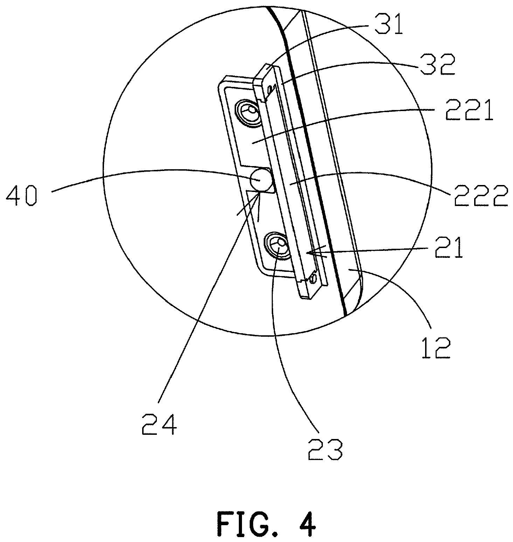

In some embodiments, with reference to FIG. 3 and FIG. 4 together, the connection surface 21 is substantially perpendicular to the surface of the battery casing 10 provided with the pole assembly 20, and in this way, the busbar 1 and the connection surface 21 may be easily connected when the batteries are grouped. The busbar 1 is thus prevented from occupying too much space during battery grouping, and the energy density of the battery apparatus is thereby ensured.

It should be noted that the surface of the battery casing 10 provided with the pole assembly 20 may be perpendicular to the stacking direction of the plurality of batteries in a group. The connection surface 21 is substantially perpendicular to the surface of the battery casing 10 provided with the pole assembly 20, and emphasis herein is on protruding without considering manufacturing errors. When installation errors occur, the connection surface 21 is perpendicular to the surface of the battery casing 10 provided with the pole assembly 20.

In some embodiments, it is not excluded that the connection surface 21 is parallel to the surface of the battery casing 10 provided with the pole assembly 20.

In an embodiment, with reference to FIG. 3 and FIG. 4 together, the pole assembly 20 is provided with an accommodating groove 24, and a portion of the insulating piece 30 is located in the accommodating groove 24. In this way, the volume of the pole assembly 20 may be reduced, the insulating piece 30 and the pole assembly 20 are ensured to be stably connected, and the insulating piece 30 and the pole assembly 20 are ensured to be stably connected to the battery casing 10.

The accommodating groove 24 may be a recess. For instance, a recess is provided on the side of the pole assembly 20 facing the battery casing 10, and a portion of the insulating piece 30 is located in the accommodating groove 24. Alternatively, a recess is provided on the side of the pole assembly 20 facing away from the battery casing 10, and a portion of the insulating piece 30 is located in the accommodating groove 24. The accommodating groove 24 may be a notch, and as shown in FIG. 3, a portion of the insulating piece 30 is located in the accommodating groove 24.

It should be noted that the specific structural form of the accommodating groove 24 is not limited herein and may be selected according to actual needs, as long as the volume of the pole assembly 20 is reduced and the connection stability between the insulating piece 30 and the pole assembly 20 is ensured.

In an embodiment, a portion of the insulating piece 30 is located between the battery casing 10 and the pole assembly 20. On the basis of ensuring the reliable insulation between the battery casing 10 and the pole assembly 20, the pole assembly 20 may thus be connected onto the battery casing 10 through the insulating piece 30. As such, it is ensured that the pole assembly 20 is stably connected to the battery casing 10.

It should be noted that the entire insulating piece 30 may be located outside the battery casing 10. The insulating piece 30 covers the outer edge of the pole assembly 20, so that the reliable connection between the pole assembly 20 and the insulating piece 30 is ensured. Further, a portion of the insulating piece 30 is located between the battery casing 10 and the pole assembly 20, so that the insulating piece 30 may be reliably connected to the battery casing 10. In this way, it is ensured that the pole assembly 20 is stably connected to the battery casing 10, so that the position of the pole assembly 20 is prevented from being adjusted during use, and the performance of the battery during use is ensured. Further, by arranging a portion of the insulating piece 30 to be located in the accommodating groove 24 of the pole assembly 20, the volume of the pole assembly 20 is reduced, and the connection stability between the insulating piece 30 and the pole assembly 20 is further ensured.

In an embodiment, the insulating piece 30 is not disposed around the outer edge of the pole assembly 20. On the basis of ensuring that the insulating piece 30 is reliably connected to the pole assembly 20, the insulating piece 30 is prevented from having a larger volume, and the weight of the battery is reduced as a whole.

With reference to FIG. 3 and FIG. 4 together, the insulating piece 30 covers most of the outer edge of the pole assembly 20, so that the insulating piece 30 is ensured to be reliably connected to the pole assembly 20. Part of the outer edge of the pole assembly 20 is not covered by the insulating piece 30. To be specific, the outer edge of the top end of the pole assembly 20 is not covered by the insulating piece 30, and the insulating piece 30 covers part of the outer edge of the connecting surface 21. That is, part of the outer edge of the connection surface 21 is not covered by the insulating piece 30.

In an embodiment, in the length direction of the connection surface 21, the insulating piece 30 covers at least opposite ends of the pole assembly 20, so that both the upper and lower ends of the connection surface 21 are provided with the insulating piece 30. In this way, the connection surface 21 may be reliably protected, and the insulating piece 30 at the upper and lower ends of the connection surface 21 may also be configured to position the busbar 1 when the busbar 1 is connected to the connection surface 21.

The length direction of the connection surface 21 may be regarded as the width direction of the first surface 11. Further, the upper and lower ends of a connecting portion 222 of the pole assembly 20 are covered with the insulating piece 30, as shown in FIG. 3 and FIG. 4.

In an embodiment, as shown in FIG. 3 and FIG. 4, the insulating piece 30 includes a main body portion 31 and a positioning portion 32. At least a part of the main body portion 31 covers the outer edge of the pole assembly 20, and an included angle is provided between the positioning portion 32 and the connection surface 21 for limiting contact with the busbar 1. Therefore, the positioning of the busbar 1 is facilitated during the connection process, the connection of the busbar 1 is facilitated, and the connection efficiency of the busbar 1 is improved. The positioning portion 32 may be connected to the battery casing 10, so as to improve the connection stability of the insulating piece 30.

With reference to FIG. 2, one surface of the busbar 1 is connected to the connection surface 21, so that the reliable electrical connection between the busbar 1 and the pole assembly 20 is ensured. The other surface of the busbar 1 is connected to the positioning portion 32, so that the busbar 1 may be easily positioned during the connection process, and a reliable contact position between one surface of the busbar 1 and the connection surface 21 is ensured. Therefore, a reliable contact surface may be ensured between the busbar 1 and the pole assembly 20, thereby ensuring the overcurrent capability of the busbar 1 and the pole assembly 20.

In an embodiment, the positioning portion 32 is substantially perpendicular to the connection surface 21, and the positioning portion 32 is substantially parallel to the surface of the battery casing 10 provided with the pole assembly 20. That is, the connection surface 21 is substantially perpendicular to the surface of the battery casing 10 provided with the pole assembly 20. In this way, the busbar 1 may be easily connected to the pole assembly 20, the reliable positioning between the busbar 1 and the insulating piece 30 may be ensured, and the assembly efficiency of the busbar 1 is thereby improved.

With reference to FIG. 2 to FIG. 4, the positioning portion 32 is disposed on the battery casing 10, the surface of the positioning portion 32 in contact with the busbar 1 is parallel to the surface of the battery casing 10 provided with the pole assembly 20, and the connection surface 21 is perpendicular to the surface of the battery casing 10 provided with the pole assembly 20. Therefore, one surface of the busbar 1 in contact with the pole assembly 20 and the other surface in contact with the insulating piece 30 may be made perpendicular.

In an embodiment, as shown in FIG. 3 and FIG. 4, the pole assembly 20 includes a terminal 22 and a pole 23. At least a part of the terminal 22 is located outside the battery casing 10, the insulating piece 30 at least partially covers the outer edge of the terminal 22, and the terminal 22 includes the connection surface 21. The pole 23 is connected to the terminal 22, and at least a part of the pole 23 is located inside the battery casing 10. The insulating piece 30 covering the outer edge of the terminal 22 may ensure the reliable fixation of the pole assembly 20. At least a part of the pole 23 connected to the terminal 22 is located inside the battery casing 10, so that the pole 23 may be electrically connected to the cell.

At least two poles 23 may be provided, and as shown in FIG. 3, two poles 23 are provided, and the two poles 23 are spaced apart from each other on the terminal 22. The terminal 22 is provided with the accommodating groove 24, and a portion of the insulating piece 30 is located in the accommodating groove 24, so as to ensure that the insulating piece 30 may reliably fix the terminal 22.

In some embodiments, the pole 23 may be used to achieve electrical connection between the battery casing 10 and the terminal 22. That is, the pole 23 is electrically connected to the battery casing 10 and the terminal 22 easily. Herein, the pole 23 may replace the conductive connecting piece 40 or may be used together with the conductive connecting piece 40 to achieve the electrical connection between the pole assembly 20 and the battery casing 10.

In an embodiment, as shown in FIG. 3 and FIG. 4, the terminal 22 includes a support portion 221 and a connection portion 222. The support portion 221 is disposed on the battery casing 10 through the insulating piece 30, and the pole 23 is connected to the support portion 221. The connection portion 222 is connected to the support portion 221, the connection portion 222 is disposed on the battery casing 10 through the insulating piece 30, and the connection portion 222 includes the connection surface 21. Herein, an included angle is provided between the support portion 221 and the connection portion 222. The support portion 221 may be reliably fixed on the battery casing 10, and the included angle between the support portion 221 and the connection portion 222 facilitates the reliable connection of the busbar 1 and the connection portion 222.

It should be noted that there is an included angle between the support portion 221 and the connection portion 222, that is, the included angle between the support portion 221 and the connection portion 222 is greater than 0 degrees and less than 180 degrees. The support portion 221 and the connection portion 222 may be substantially perpendicular, the insulating piece 30 covers the outer edges of the support portion 221 and the connection portion 222, and the positioning portion 32 and the support portion 221 are respectively located on two sides of the connection portion 222, as shown in FIG. 4.

In an embodiment, as shown in FIG. 3, the battery casing 10 includes two opposite first surfaces 11 and four second surfaces 12 surrounding the first surfaces 11. That is, the battery casing10 has an approximately rectangular body structure. An area of each first surface 11 is greater than an area of each second surface 12. The pole assembly 20 is disposed on one of the first surfaces 11, the insulating piece 30 is disposed on the first surface 11 and covers the outer edge of the pole assembly 20. Therefore, it is ensured that the pole assembly 20 has a reliable support surface, and the stability of the pole assembly 20 is thereby ensured.

It should be noted that, the two opposite first surfaces 11 are larger surfaces of the battery casing 10, the four second surfaces 12 are smaller surfaces of the battery casing 10, and the four second surfaces 12 include two pairs of smaller surfaces, namely, a first pair of smaller surfaces extending in the length direction of the battery casing 10 and a second pair of smaller surfaces extending in the width direction of the battery casing 10. The area of each of the first pair of smaller surfaces is greater than the area of each of the second pair of smaller surfaces, and both are smaller than the area of each of the large surfaces. The connection surface 21 is perpendicular to the first surfaces 11.

In some embodiments, it is not excluded that the pole assembly 20 may be disposed on the second surface 12.

In some embodiments, two pole assemblies 20 are provided, and the two pole assemblies 20 are respectively a positive pole assembly and a negative pole assembly. Two tabs are also provided for the cell, and the two tabs are respectively a positive tab and a negative tab. The positive pole assembly is connected to the positive tab, and the negative pole assembly is connected to the negative tab.

In an embodiment, as shown in FIG. 2 and FIG. 3, the battery casing 10 is provided with a recess 13. Two recesses 13 may be provided. The two recesses 13 and the two pole assemblies 20 may be located on two opposite surfaces of the battery casing 10. Herein, when the batteries are grouped, the pole assemblies 20 of another battery may be accommodated in the recesses 13, such that the energy density of the battery apparatus is increased.

The pole assembly 20 may be disposed on the end portion of the battery casing 10, such that convenient connection may be achieved, and the length space of the battery may be fully utilized. The two pole assemblies 20 may be disposed on the same surface of the battery casing 10, or the two pole assemblies 70 may be disposed on two surfaces of the battery casing 10.

It is noted that the battery casing 10 has an approximately rectangular body structure, that is, the battery casing 10 may be a rectangular body structure ignoring manufacturing errors and the like.

In an embodiment, the pole assembly 20 is adjacent to the potential collecting portion 15, that is, the pole assembly 20 may be disposed at the end portion of the battery casing 10. Therefore, the pole assembly 20 may be electrically connected to the busbar 1 easily when the batteries are grouped subsequently.

In an embodiment, the pole assembly 20 is disposed on a side of the first surface 11 adjacent to the potential collecting portion 15, and the first surface 11 may provide reliable support for the pole assembly 20. Further, the pole assembly 20 may be disposed at the end portion of the first surface 11. Therefore, the pole assembly 20 may be electrically connected to the busbar 1 easily when the batteries are grouped subsequently.

With reference to FIG. 1 and FIG. 2 together, two adjacent batteries may be connected through the busbar 1. A circuit board 2 of the battery apparatus may collect the voltage of the battery. The first connecting piece 3 of the circuit board 2 may be connected to the potential collecting portion 15, and the second connecting piece 4 of the circuit board 2 may be connected to the busbar 1, such that the voltage of the corresponding battery may be obtained.

When the potential collecting portion 15 is electrically connected to the positive pole assembly through the battery casing 10, one busbar 1 may be connected to the negative pole assembly of the battery, such that when the first connecting piece 3 of the circuit board 2 is connected to the potential collecting portion 15 and the second connecting piece 4 of the circuit board 2 is connected to the busbar 1, the voltage of the battery may be obtained. In this embodiment, the pole assembly 20 and the potential collecting portion 15 are arranged adjacent to each other, thus, the connection between the busbar 1 and the pole assembly 20, the connection between second connecting piece 4 of the circuit board 2 and the busbar 1, and the connection between the first connecting piece 3 of the circuit board 2 and the potential collecting portion 15 are facilitated. The first connecting piece 3 and the second connecting piece 4 may both be nickel pieces.

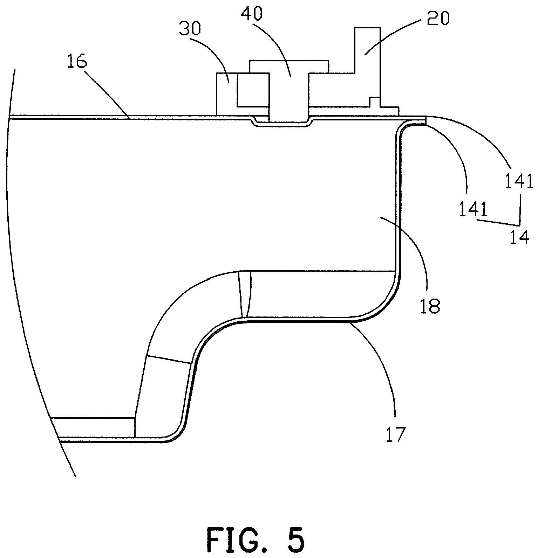

In an embodiment, as shown in FIG. 5 to FIG. 9, the battery casing 10 includes a first casing piece 16 and a second casing piece 17. The second casing piece 17 is connected to the first casing piece 16 to form a cell accommodating space 18. The cell is arranged in the cell accommodating space 18, so that the cell is ensured to be reliably sealed.

Both the first casing piece 16 and the second casing piece 17 are formed with spaces. After the first casing piece 16 and the second casing piece 17 are butted together, the cell is located in the cell accommodating space 18 formed by the two spaces. Herein, the spatial depths of the first casing piece and the second casing piece may be the same or different, which are not limited herein. Alternatively, the first casing piece 16 may be a flat plate, and the second casing piece 17 is formed with a space. The arrangement of the flat plate may facilitate the subsequent connection, and the processing difficulty is low.

In an embodiment, a flange 141 is provided on the peripheral edge of at least one of the first casing piece 16 and the second casing piece 17, so as to form the flange structure 14 and the potential collecting portion 15 after the second casing piece 17 is connected to the first casing piece 16. The arrangement of the flange 141 may facilitate the connection between the first casing piece 16 and the second casing piece 17, and the flange structure 14 formed subsequently may also be used for fixing the batteries when they are grouped, such that the batteries are ensured to be reliably fixed. The flange structure 14 may also be used as a heat dissipation fin to enhance the heat dissipation performance of the battery, and the heat dissipation performance of the battery may thus be improved. The flange structure 14 of this embodiment may extend out of the potential collecting portion 15, so that the voltage of the battery may be conveniently collected.

With reference to FIG. 5, a flange 141 may be provided on the peripheral edge of the first casing piece 16, and a flange 141 may be provided on the peripheral edge of the second casing piece 17, so as to facilitate the connection between the first casing piece 16and the second casing piece 17. For instance, the first casing piece 16 and the second casing piece 17 may be welded easily.

The first casing piece 16 may be a flat plate, and the second casing piece 17 is formed with a space. The peripheral edge of the second casing piece 17 is provided with a flange 141, and the first casing piece 16 is welded to the flange 141. As such, the first casing piece 16 is ensured to be reliably welded to the second casing piece 17, and the stability of connection is thereby provided. The arrangement of the flange 141 increases the welding area, and the welding stability is thereby improved.

It should be noted that the flange 141 may be understood as a flange edge, for example, a flange edge extending outwards from the peripheral outer edge of a plate or a flange edge extending outwards from the side wall of a structure with spaces. Herein, the flange edge is approximately perpendicular to the side wall. For the aforementioned arrangement of the flanges 141 on the peripheral edges of the first casing piece 16 and the second casing piece 17 in the foregoing embodiments, reference may be made to this arrangement. In this way, the flange 141 of the first casing piece 16 and the flange 141 of the second casing piece 17 may directly face each other and thus may be easily connected.

It should be noted that the first casing piece 10 may include the first casing piece 16 and the second casing piece 17 which are provided separately. In some embodiments, it is not excluded that the first casing piece 16 and the second casing piece 17 may be provided integrally. For instance, the first casing piece 16 and the second casing piece 17 are formed by stamping, bending, etc. from a sheet, and the first casing piece 16 and the second casing piece 17 are then connected by welding. The flange structure 14 may be a closed structure surrounding the battery casing 10, or the flange structure 14 may be a non-closed structure surrounding the battery casing 10.

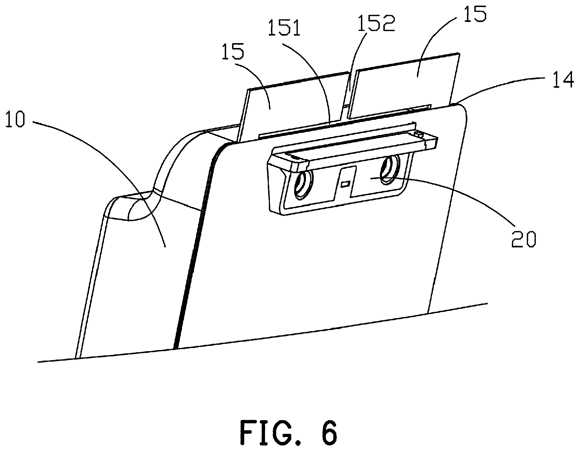

In an embodiment, as shown in FIG. 6 to FIG. 8, the potential collecting portion 15 extends from the flange structure 14, and the potential collecting portion 15 is substantially parallel to the flange structure 14. Therefore, the process of forming the potential collecting portion 15 may be reduced, and the subsequent connection with the voltage collecting structure may also be facilitated. After all, the potential collecting portion 15 extending from the flange structure 14 may increase the length of the battery casing 10 in the length direction, but in the specific connection process, it is necessary to avoid interference between the potential collecting portion 15 and the busbar 1.

In an embodiment, the potential collecting portion 15 is provided on the flange structure 14 in the width direction of the battery casing 10, and the pole assembly 20 may also be disposed at the end of the battery casing 10, so the subsequent grouping and connecting may thus be easily performed.

In an embodiment, the potential collecting portion 15 extends from the flange structure 14, and an included angle is provided between the potential collecting portion 15 and the flange structure 14. In this way, when the batteries are grouped, the potential collecting portion 15 is prevented from increasing the space of the battery box body, the space utilization rate of the battery box body is improved, and the interference between the potential collecting portion 15 and the busbar 1 and other structures is prevented from occurring.

In an embodiment, the potential collecting portion 15 is substantially perpendicular to the flange structure 14. As such, the space occupied by the potential collecting portion 15 in the length direction of the battery may be minimized, the space utilization rate of the battery box body may be improved, and the interference between the potential collecting portion 15 and the structures such as the busbar 1 may also be prevented from occurring.

It should be noted that the potential collecting portion 15 is substantially perpendicular to the flange structure 14, and under the condition of ignoring manufacturing errors and the like, the potential collecting portion 15 is perpendicular to the flange structure 14.

In an embodiment, the potential collecting portion 15 is bent from one side of the flange structure 14 facing away from the battery casing 10, so that the potential collecting portion 15 and the battery casing 10 are spaced apart from each other. That is, the projection of the battery casing 10 on the plane where the potential collecting portion 15 is located does not overlap the potential collecting portion 15.

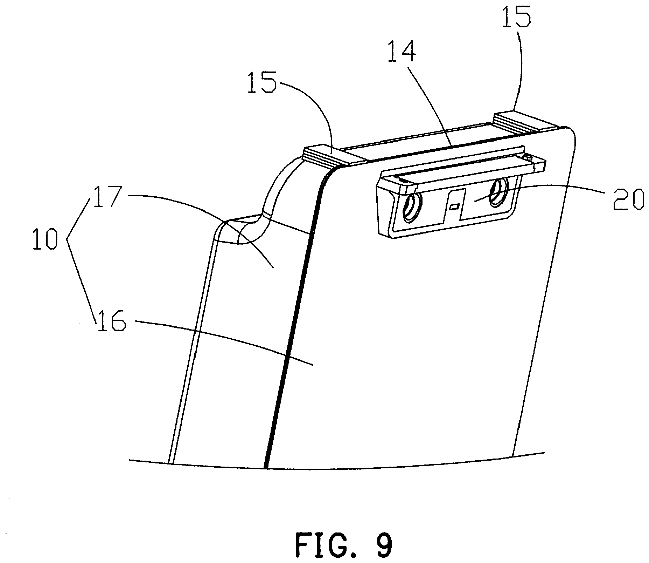

In an embodiment, as shown in FIG. 9, the potential collecting portions 15 are bent from one side of the flange structure 14 facing the battery casing 10, so that the potential collecting portions 15 face the battery casing 10. That is, the projection of the battery casing 10 on the plane where the potential collecting portions 15 are located overlaps the potential collecting portions 15. Therefore, the potential collecting portions 15 are prevented from increasing the height space of the battery, and the potential collecting portions 15 can be effectively prevented from contacting the pole assembly 20.

In an embodiment, as shown in FIG. 9, the potential collecting portions 15 contact the battery casing 10. As such, the battery casing 10 can provide a certain support force for the potential collecting portions 15, and subsequently, the voltage collecting structure may thus be easily connected to the potential collecting portions 15.

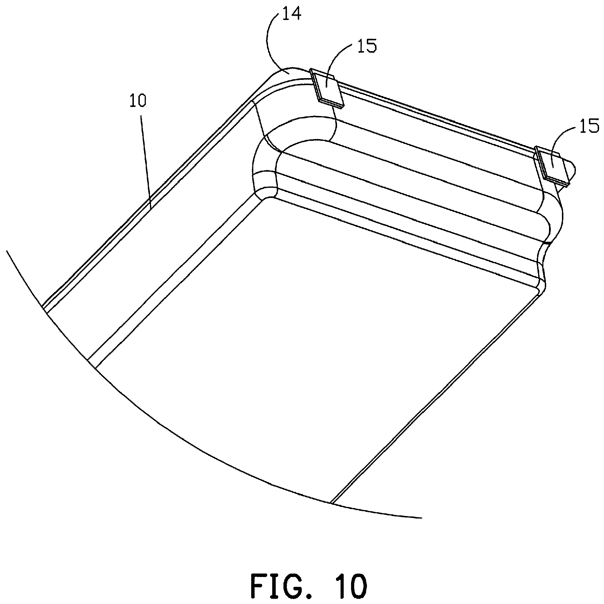

In an embodiment, as shown in FIG. 10, the potential collecting portions 15 face the battery casing 10, and the potential collecting portions 15 and the battery casing 10 are spaced apart, that is, certain distances are provided between the potential collecting portions 15 and the battery casing 10. This design may prevent the potential collecting portions 15 from being too thick and may reduce the overall weight of the battery. Further, when the voltage collecting structure and the potential collecting portions 15 are subsequently welded, the structure of the battery casing 10 may be prevented from being damaged during the welding process.

In an embodiment, the potential collecting portion 15 is single-layered, that is, the thickness of the potential collecting portion 15 may be consistent with the thickness of the flange structure 14. In this way, the manufacturing process of the potential collecting portion 15 may be simplified, and the molding efficiency of the battery is accordingly improved. The potential collecting portion 15 has a rectangular structure. A portion of the flange structure 14 is provided with the potential collecting portion 15.

In an embodiment, the potential collecting portion 15 is multi-layered, that is, the thickness of the potential collecting portion 15 may be greater than the thickness of the flange structure 14. In this way, the structural strength of the potential collecting portion 15 is improved, and damage to the potential collecting portion 15 is avoided. The multi-layered potential collecting portion 15 may be formed by folding.

In some embodiments, the potential collecting portion 15 is multi-layered, the potential collecting portion 15 is bent to form multiple layers, and the multi-layered potential collecting portion 15 may be formed by bending the flange on the first casing piece 16 or the second casing piece 17 at least twice.

After the potential collecting portion 15 is unfolded, the length direction of the potential collecting portion 15 is parallel to the length direction of the battery casing 10, that is, the potential collecting portion 15 is a multi-layered structure formed by bending in the length direction of the battery casing 10.

After the potential collecting portion 15 is unfolded, the length direction of the potential collecting portion 15 is parallel to the width direction of the battery casing 10, that is, the potential collecting portion 15 is a multi-layered structure formed by bending in the width direction of the battery casing 10.

It should be noted that each first surface 11 of the battery casing 10 may be a substantially rectangular surface, and in this case, the length direction of the battery casing 10 may be considered as the extension direction of the longer side of the first surface 11, and the width direction of the battery casing 10 may be considered as the extension direction of the shorter side of the first surface 11. Correspondingly, after the potential collecting portion 15 is unfolded, the length direction of the potential collecting portion 15 may be regarded as the direction in which the longer side thereof extends, and the width direction of the potential collecting portion 15 may be regarded as the direction in which the shorter side thereof extends.

In some embodiments, the potential collecting portion 15 is a multi-layered, and the first casing piece 16 and the second casing piece 17 together form the multi-layered potential collecting portion 15. That is, flanges may be provided on both the first casing piece 16 and the second casing piece 17, so that the upper and lower flanges may form a two-layered potential collecting portion 15. Further, the two-layer potential collecting portion 15 may be further bent, which is not limited herein.

In an embodiment, the potential collecting portion 15 is only formed on the first casing piece 16, that is, the potential collecting portion 15 may not be provided on the second casing piece 17. Therefore, the flange may be more easily bent to form a multi-layered potential collecting portion 15, and thereby, a potential collecting portion 15 with high quality is obtained.

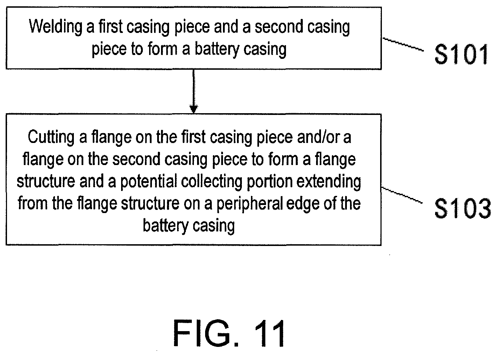

It should be noted that there may be a plurality of potential collecting portions 15, and at least two potential collecting portions 15 may be provided at one end of the battery casing 10. As shown in FIG. 6 to FIG. 9, one end of the battery casing 10 may be provided with two potential collecting portions 15, and the potential collecting portions 15 may be selectively connected to the voltage collecting structure. Two sides of the pole assembly 20 are respectively provided with the potential collecting portions 15, that is, the pole assembly 20 is located between the two potential collection portions 15, such that the battery may be easily assembled, and even if the battery is rotated 180 degrees, it can still be ensured that the collection point connected by the voltage collecting structure remains unchanged. Both opposite ends of the battery casing 10 may be respectively provided with the potential collecting portions 15, so that the connection position of the circuit board 2 may be selected, so as to facilitate the arrangement of each structure. An embodiment of the disclosure further provides a battery manufacturing method, and with reference to FIG. 11, the battery manufacturing method includes the following steps.

In step S101, the first casing piece 16 and the second casing piece 17 are welded to form the battery casing 10.

In S103, the flange 141 on the first casing piece 16 and/or the flange 141 on the second casing piece 17 is cut to form the flange structure 14 and the potential collecting portion 15 extending from the flange structure 14 on the peripheral edge of the battery casing 10.

In the battery manufacturing method provided by an embodiment of the disclosure, the first casing piece 16 and the second casing piece 17 are welded to form the battery casing 10. The flange 141 may be cut to form the flange structure 14 and the potential collecting portion 15, and the potential collecting portion 15 may be configured to be connected to the voltage collection structure, so the voltage collection and connection of the battery may be easily performed. Since the flange structure 14 and the potential collecting portion 15 are integrally formed, processing and forming may be conveniently performed, materials are saved, and fewer processing steps are required, so that the forming efficiency of the battery is enhanced, and the manufacturing performance of the battery is improved.

It is noted that the flange 141 is provided on the peripheral edge of at least one of the first casing piece 16 and the second casing piece 17. Further, after the second casing piece 17 is welded to the first casing piece 16, at least a portion of the flange 141 is relatively long so that it can be cut. As such, the flange structure 14 is formed in the circumferential direction of the battery casing 10, and a potential collecting portion 15 may be formed on a portion of the flange structure 14. The arrangement of the flange 141 may allow the first casing piece 16 and the second casing piece 17 to be easily connected, and the flange structure 14 formed subsequently may also be used for fixing the batteries when they are grouped, so that the batteries are ensured to be reliably fixed. The flange structure 14 may also be used as a heat dissipation fin to enhance the heat dissipation performance of the battery, and the heat dissipation performance of the battery may thus be improved. The potential collecting portion 15 may extend from the flange structure 14 of this embodiment, so that the voltage of the battery may be conveniently collected.

With reference to FIG. 5, a flange 141 may be provided on the peripheral edge of the first casing piece 16 and a flange 141 may be provided on the peripheral edge of the second casing piece 17. The first casing piece 16 may thus be easily connected to the second casing piece 17. After the first casing piece 16 and the second casing piece 17 are welded, part of the flanges 141 may be cut. For instance, if the flange 141 on one side of the battery casing 10 is relatively long, the potential collecting portion 15 may be cut out.

In an embodiment, the first casing piece 16 may be a flat plate, and the second casing piece 17 is formed with a space. Before the first casing piece 16 and the second casing piece 17 are welded, the pole assembly 20 and the insulating piece 30 may be formed on the first casing piece 16.

In an embodiment, after the flange 141 on the first casing piece 16 and/or the flange141 on the second casing piece 17 is cut, the potential collecting portion 15 may be directly formed. As shown in the structure shown in FIG. 6, herein, the potential collecting portions 15 are substantially parallel to the flange structure 14, so that the process of forming the potential collecting portions 15 may be reduced.

In an embodiment, in the battery manufacturing method, following steps are further included. After the flange 141 on the first casing piece 16 and/or the flange 141 on the second casing piece 17 is cut, the flange 141 extending from the flange structure 14 is bent to form the potential collecting portion 15. In this way, the flange 141 may be bent into a multi-layered structure to form the potential collecting portion 15 with a thickness greater than a thickness of the flange structure 14, and the structural strength of the potential collecting portion 15 is thereby improved.

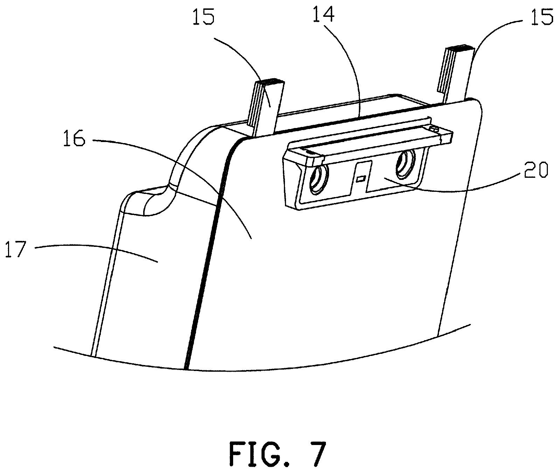

In an embodiment, bending the flange extending from the flange structure 14 includes the following step. The flange 141 is bent in the width direction of the battery casing 10 to form a multi-layered potential collecting portion 15, which is bent from the structure shown in FIG. 6 to the structure shown in FIG. 7.

In an embodiment, bending the flange into a multi-layered structure includes the following step. The flange 141 is bent in the width direction of the battery casing 10, and a multi-layered structure is thereby formed. That is, after the potential collecting portion 15 is unfolded, the length direction of the potential collecting portion 15 is parallel to the width direction of the battery casing 10.

In an embodiment, bending the flange into a multi-layered structure includes the following step. The flange 141 is bent in the length direction of the battery casing 10, and a multi-layered structure is thereby formed. That is, after the potential collecting portion 15 is unfolded, the length direction of the potential collecting portion 15 is parallel to the length direction of the battery casing 10.

In an embodiment, the multi-layered structure is bent from the side of the flange structure 14 facing the battery casing 10, so that the potential collecting portion 15 faces the battery casing 10. In this way, the space occupied by the potential collecting part 15 in the length direction of the battery may be minimized. In an embodiment, bending the flange extending from the flange structure 14 includes the following step. The flange is bent from one side of the flange structure 14 facing the battery casing 10, so that the potential collecting portion 15 faces the battery casing 10. The potential collecting portion 15 is substantially perpendicular to the flange structure 14, which is bent from the structure shown in FIG. 7 to the structure shown in FIG. 9. As such, the space occupied by the potential collecting portion 15 in the length direction of the battery may be minimized, the space utilization rate of the battery box body may be improved, and the interference between the potential collecting portion 15 and the structures such as the busbar 1 may also be prevented from occurring.

In an embodiment, bending the flange extending from the flange structure 14 further includes the following step. The flange is bent from one side of the flange structure 14 facing away from the battery casing 10, so that the potential collecting portion 15 and the battery casing 10 are spaced apart from each other. That is, the projection of the battery casing 10 on the plane where the potential collecting portion 15 is located does not overlap the potential collecting portion 15.

In an embodiment, bending the flange extending from the flange structure 14 includes the following step. The flange is bent into a multi-layered structure, so that the strength of the potential collecting portion 15 may be improved, and the damage of the potential collecting portion 15 can be avoided. The multi-layered potential collecting portion 15 may contact the battery casing 10. As such, the battery casing 10 can provide a certain support force for the potential collecting portion 15, and subsequently, the voltage collecting structure may thus be easily connected to the potential collecting portion 15.

In an embodiment, the flange 141 on the first casing piece 16 and/or the flange 141 on the second casing piece 17 is cut, so that the potential collecting portion 15 is multi-layered. The thickness of the potential collecting portion 15 may be greater than the thickness of the flange structure 14. In this way, the structural strength of the potential collecting portion 15 is improved, and damage to the potential collecting portion 15 is avoided. The multi-layered potential collecting portion 15 may be formed by folding. Further, the potential collecting portion 15 may be bent, for example, may be bent from one side of the flange structure 14 facing away from the battery casing 10, so that the potential collecting portion 15 is spaced apart from the battery casing 10. Alternatively, the flange is bent from one side of the flange structure facing the battery casing 10, so that the potential collecting portion 15 faces the battery casing 10.

In an embodiment, the flange 141 on the first casing piece 16 and/or the flange 141 on the second casing piece 17 is cut, so that the potential collecting portion 15 is a single-layered structure. That is, the thickness of the potential collecting portion 15 may be consistent with the thickness of the flange structure 14. In this way, the manufacturing process of the potential collecting portion 15 may be simplified, and the molding efficiency of the battery is accordingly improved.

In an embodiment, cutting the flange on the first casing piece 16 and/or the flange on the second casing piece 17 includes the following step. A first slit 151 is cut out in the width direction of the battery casing 10, so that the multi-layered potential collecting portion 15 may be formed by subsequent bending.

To be specific, the first slit 151 is cut out from one end of the flange 141 in the width direction of the battery casing 10, and then the flange 141 is bent in the width direction of the battery casing 10, so that the structure shown in FIG. 7 may be formed. Further, the flange 141 may be bent again to form the structure shown in FIG. 9. Herein, one end of the battery casing 10 may form one potential collecting portion 15.

In an embodiment, cutting the flange on the first casing piece 16 and/or the flange on the second casing piece 17 includes the following step. A second slit 152 is cut out in the length direction of the battery casing 10. That is, by cutting from the middle of the flange 141, one flange 141 is divided into two parts, and two potential collecting portions 15 are thereby formed. The flange 141 may be bent or may not be bent.

In an embodiment, cutting the flange on the first casing piece 16 and/or the flange on the second casing piece 17 includes the following step. The first slit 151 is cut in the width direction of the battery casing 10, and the second slit 152 is cut in the length direction of the battery casing 10 to form the structure shown in FIG. 6. Bending may be performed subsequently to form the structures shown in FIG. 7 to FIG. 9.

The sequence of cutting the first slit 151 in the width direction of the battery casing 10 and cutting the second slit 152 in the length direction of the battery casing 10 may not be limited. The flange 141 is bent along the first slit 151 to form a multi-layered structure. Subsequently, the multi-layered structure may be bent along the side facing the battery casing 10, so that the potential collecting portions 15 may be disposed opposite to the battery casing 10. The direction in which the flange 141 is bent is not limited, and the potential collecting portions 15 may finally be brought into contact with the battery casing 10, or finally, the potential collecting portions and the battery casing 10 are spaced apart. For instance, the flange 141 is bent away from the battery casing 10 along the first slit 151, and then the multi-layered structure is bent along the side facing the battery casing 10, at this time, the potential collecting portions 15 face the battery casing 10, and the potential collecting portions 15 and the battery casing 10 are spaced apart, as shown in FIG. 10. Alternatively, the flange 141 is bent towards the battery casing 10 along the first slit 151, and then the multi-layered structure is bent along the side facing the battery casing 10, at this time, the potential collecting portions 15 face the battery casing 10, and the potential collecting portions 15 may contact the battery casing 10, as shown in FIG. 9. Certainly, when the number of layers of the multi-layered structure is relatively small, it is not excluded that the potential collecting portions 15 are spaced apart from the battery casing 10.

In an embodiment, the battery manufacturing method is used to form the battery described above.

An embodiment of the disclosure further provides a battery apparatus including the abovementioned battery.

The battery apparatus provided by an embodiment of the disclosure includes the battery. The battery includes the battery casing 10, and by arranging the flange structure 14 at the peripheral edge of the battery casing 10 and by arranging the potential collecting portion 15 on the flange structure 14, the potential collecting portion 15 may be configured to be connected to a voltage collection structure, so as to facilitate the voltage collection and connection of the battery. By configuring the flange structure 14 and the potential collecting portion 15 to be integrally formed, processing and forming may be conveniently performed, materials are saved, and fewer processing steps are required, so that the forming efficiency of the battery apparatus is enhanced, and the performance of the battery is improved.

In an embodiment, the battery apparatus may include at least two batteries, and the busbar 1 connects two pole assemblies 20 of two adjacent batteries, as shown in FIG. 1 and FIG. 2. The batteries are arranged in sequence, and further, the first surfaces 11 of adjacent batteries are arranged opposite to each other, so that the stacking direction of the batteries is perpendicular to the first surfaces 11.

The busbar 1 connects the pole assemblies 20 of two adjacent batteries, and the connection surfaces 21 of the pole assemblies 20 are substantially parallel to the end surfaces of the batteries so as to be connected to the busbar 1. That is, the connection surfaces 21 may be parallel to one of the second surfaces 12 of the batteries, so that the busbar 1 and the pole assemblies 20 may be easily connected, and the space utilization rate is also improved. The busbar 1 may have a substantially U-shaped structure, so as to be easily connected to the pole assemblies 20 of two batteries, as shown in FIG. 2.

In an embodiment, the insulating piece 30 includes the main body portion 31 and the positioning portion 32. The busbar 1 is in limited contact with the positioning portion 32, so that the busbar 1 may be easily positioned during the connection process, thereby facilitating the connection of the busbar 1 and improving the connection efficiency of the busbar 1. Further, the positioning portion 32 may improve the connection stability between the insulating piece 30 and the battery casing 10. the battery apparatus is a battery module or a battery pack.

In an embodiment, with reference to FIG. 1 and FIG. 2 together, two adjacent batteries may be connected through the busbar 1. The battery apparatus further includes the circuit board 2, and the circuit board 2 may collect the voltage of the battery. The first connecting piece 3 of the circuit board 2 may be connected to the potential collecting portion 15, and the second connecting piece 4 of the circuit board 2 may be connected to the busbar 1, so that the voltage of the corresponding battery may be obtained. The first connecting piece 3 and the second connecting piece 4 may both be nickel pieces.

In an embodiment, two pole assemblies 20 are provided, the two pole assemblies 20 are respectively disposed at two ends of the battery casing 10, and two ends of the battery casing 10 are respectively provided with the potential collecting portions 15. Herein, one of the two pole assemblies 20 is electrically connected to the battery casing 10, and the voltage collecting structure may be connected to the other one of the pole assemblies 20 and the adjacent potential collecting portion 15, so as to obtain the voltage of the corresponding battery.

To be specific, the battery casing 10 is electrically connected to the adjacent pole assembly 20 through one potential collecting portion 15, and the other potential collecting portion 15 and the adjacent pole assembly 20 are configured to be connected to the voltage collecting structure to obtain the voltage of the corresponding battery. For instance, the positive pole assembly may be electrically connected to one potential collecting portion 15 through the conductive structure, and the negative electrode component and the other adjacent potential collecting portion 15 are configured to be electrically connected to the voltage collecting structure to collect the voltage of the battery.

In an embodiment, at least two batteries are provided. The busbar 1 is connected to the pole assemblies 20 of adjacent batteries. The battery casing 10 is electrically connected to the busbar 1 through one potential collecting portions 15, so that the potential collecting portion 15 is electrically connected to the adjacent pole assembly 20. For instance, the busbar 1 is connected to the positive pole assembly of one battery, and one potential collecting portion 15 may be electrically connected to the busbar 1 through the conductive structure. The negative electrode component and the other adjacent potential collecting portion 15 are configured to be electrically connected to the voltage collecting structure to collect the voltage of the battery. Alternatively, the busbar 1 is connected to the negative pole assembly of one battery, and one potential collecting portion 15 may be electrically connected to the busbar 1 through the conductive structure. The positive pole assembly and the other adjacent potential collecting portion 15 are configured to be electrically connected to the voltage collecting structure to collect the voltage of the battery.

In an embodiment, two pole assemblies 20 are provided, the two pole assemblies 20 are respectively disposed at two ends of the battery casing 10, and one end of the battery casing 10 is provided with the potential collecting portion 15. Herein, one of the two pole assemblies 20 away from the potential collecting portion 15 is electrically connected to the battery casing 10, and the voltage collecting structure may be connected to the other one of the pole assemblies 20 and the adjacent potential collecting portion 15 to obtain the corresponding voltage of the battery. For instance, when the potential collecting portion 15 is provided on one side of the positive pole assembly, the negative pole assembly is electrically connected to the battery casing 10, and the positive pole assembly and the potential collecting portion 15 are configured to be electrically connected to the voltage collecting structure to collect the voltage of the battery. Alternatively, when the potential collecting portion 15 is provided on one side of the negative pole assembly, the positive pole assembly is electrically connected to the battery casing 10, and the negative pole assembly and the potential collecting portion 15 are configured to be electrically connected to the voltage collecting structure to collect the voltage of the battery.

The battery module includes a plurality of batteries, and the battery module may further include end plates and side plates. The end plates and the side plates are configured to secure a plurality of batteries.

A battery pack may include a battery box, and a plurality of batteries may be disposed in the battery box. A plurality of batteries may be formed into a battery module and then be arranged in the battery box, and the plurality of batteries may be secured by the end plates and the side plates. The plurality of batteries may be directly disposed in the battery box, that is, the plurality of batteries are not required to be arranged into groups, and the end plates and the side plates may then be removed.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising a battery casing (10), wherein a peripheral edge of the battery casing (10) is provided with a flange structure (14), a potential collecting portion (15) is provided on the flange structure (14), the potential collecting portion (15) extends from the flange structure (14), and the flange structure (14) and the potential collecting portion (15) are integrally formed.

2. The battery according to claim 1, wherein the potential collecting portion (15) is substantially parallel to the flange structure (14).

3. The battery according to claim 1, wherein the potential collecting portion (15) is substantially perpendicular to the flange structure (14).

4. The battery according to claim 3, wherein the potential collecting portion (15) is bent from one side of the flange structure (14) facing the battery casing (10), such that the potential collecting portion (15) faces the battery casing (10).

5. The battery according to claim 3 or 4, wherein the potential collecting portion (15) contacts the battery casing (10), or
the potential collecting portion (15) and the battery casing (10) are spaced apart from each other.

6. The battery according to any one of claims 1-4, wherein the potential collecting portion (15) is formed by one or a plurality of layers.

7. The battery according to claim 6, wherein the potential collecting portion (15) is bent to form a plurality of layers,
wherein after the potential collecting portion (15) is unfolded, a length direction of the potential collecting portion (15) is parallel to a length direction of the battery casing (10), or the length direction of the potential collecting portion (15) is parallel to a width direction of the battery casing (10).

8. The battery according to any one of claims 1-4, further comprising a pole assembly (20), and the pole assembly (20) is disposed on the battery casing (10),
wherein the pole assembly (20) is adjacent to the potential collecting portion (15).

9. The battery according to claim 8, wherein the battery casing (10) comprises two opposite first surfaces (11) and four second surfaces (12) surrounding the first surfaces, and an area of each first surface (11) is greater than an area of each second surface (12), and the pole assembly (20) is disposed on one of the first surfaces (11),
wherein the pole assembly (20) is disposed on a side of the one of the first surfaces (11) adjacent to the potential collecting portion (15).

10. The battery according to claim 9, wherein the pole assembly (20) comprises a connection surface (21) configured to be connected to a busbar (1), and the connection surface (21) is perpendicular to the first surfaces (11).

11. The battery according to claim 8, wherein two sides of the pole assembly (20) are both provided with the potential collecting portion (15).

12. The battery according to claim 8, wherein the pole assembly (20) is two in number, and the two pole assemblies (20) are respectively disposed at two ends of the battery casing (10),
wherein each end of the battery casing (10) is provided with the potential collecting portion (15) or one end of the battery casing (10) is provided with the potential collecting portion (15), and one of the two pole assemblies (20) away from the potential collecting portion (15) is electrically connected to the battery casing (10).

13. The battery according to any one of claims 1-4, wherein the battery casing (10) comprises:
a first casing piece (16); and
a second casing piece (17), connected to the first casing piece (16) to form a cell accommodating space (18),
wherein a flange is provided on a peripheral edge of at least one of the first casing piece (16) and the second casing piece (17), so as to form the flange structure (14) and the potential collecting portion (15) after the second casing piece (17) is connected to the first casing piece (16).

14. The battery according to claim 13, wherein the first casing piece (16) and the second casing piece (17) together form the multi-layered potential collecting portion (15), or
the potential collecting portion (15) is formed only on the first casing piece (16).

15. A battery manufacturing method, comprising the following steps:
welding a first casing piece (16) and a second casing piece (17) to form a battery casing (10); and
cutting a flange on the first casing piece (16) and/or a flange on the second casing piece (17) to form a flange structure (14) and a potential collecting portion extending from the flange structure (14) on a peripheral edge of the battery casing (10).

16. The battery manufacturing method according to claim 15, further comprising:
after cutting the flange on the first casing piece (16) and/or the flange on the second casing piece (17), bending the flange extending from the flange structure (14) to form the potential collecting portion (15).

17. The battery manufacturing method according to claim 16, wherein the step of bending the flange extending from the flange structure (14) comprises:
bending the flange from one side of the flange structure (14) facing the battery casing (10), such that the potential collecting portion (15) faces the battery casing (10), wherein the potential collecting portion (15) is substantially perpendicular to the flange structure (14).

18. The battery manufacturing method according to claim 16 or 17, wherein the step of bending the flange extending from the flange structure (14) comprises:
bending the flange into a multi-layered structure.

19. The battery manufacturing method according to claim 18, wherein the step of bending the flange into a multi-layered structure comprises:
bending the flange in a width direction of the battery casing (10) or bending the flange in a length direction of the battery casing (10).

20. The battery manufacturing method according to claim 18, wherein the multi-layered structure is bent from one side of the flange structure (14) facing the battery casing (10), such that the potential collecting portion (15) faces the battery casing (10).

21. The battery manufacturing method according to claim 16 or 17, wherein the step of cutting the flange on the first casing piece (16) and/or the flange on the second casing piece (17) comprises:
cutting out a first slit in a width direction of the battery casing (10); and/or
cutting out a second slit in a length direction of the battery casing (10).

22. A battery apparatus, comprising the battery according to any one of claims 1-14.

23. The battery apparatus according to claim 22, wherein the potential collecting portion (15) is in plurality, two ends of the battery casing (10) are respectively provided with the potential collecting portions (15), the battery casing (10) is electrically connected to an adjacent pole assembly (20) through one of the potential collecting portions (15), and another one of the potential collecting portions (15) and the adjacent pole assembly (20) are configured to be connected to a voltage collecting structure.

24. The battery apparatus according to claim 23, wherein the battery is at least two in number, the battery apparatus further comprises a busbar (1), the busbar (1) is connected to the pole assemblies (20) of adjacent two of the batteries, and the battery casing (10) is electrically connected to the busbar (1) through one of the potential collecting portions (15), such that the one of the potential collecting portions (15) is electrically connected to an adjacent one of the pole assemblies (20).
